# EUROPEAN PATENT APPLICATION

(11) **EP 4 120 464 A1**
(43) Date of publication of application: **18.01.2023**
(21) Application number: 20924744.4
(22) Date of filing: 31.07.2020
(51) Int. Cl.: H01M 50/529

(54) **BATTERY TOP COVER STRUCTURE AND ASSEMBLY METHOD**

(30) Priority: 10.03.2020 CN 202010161532
(71) Applicant: Jiangsu Zenio New Energy Battery Technologies Co., Ltd., Jiangsu 215500 (CN)
(72) Inventor: LI, Yongjun, Dongguan, Guangdong 523000 (CN); WANG, Cheng, Dongguan, Guangdong 523000 (CN); ZOU, Wuyuan, Dongguan, Guangdong 523000 (CN); JIANG, Bin, Nanjing, Jiangsu 210000 (CN); GUO, Yuguo, Dongguan, Guangdong 523000 (CN)
(74) Representative: Vitina, Maruta
(86) International application number: PCT/CN2020/106430
(87) International publication number: WO 2021/179525

(57) **Abstract**

A battery top cover structure includes a top cover sheet and a first electrode arranged thereon. A sealing sleeve is sleevedly provided between the first electrode and the top cover sheet. The first electrode includes a conductive part and a welding part. A top of the welding part passes through the top cover sheet and is fixed to the conductive part. A bottom of the welding part is fixed to the bottom surface of the top cover sheet by means of a plastic part. An assembly method of the battery top cover structure is also provided.

## Description

### TECHNICAL FIELD

This application relates to battery production and manufacturing, and more particularly to a battery top cover structure and an assembly method thereof.

### BACKGROUND

Nowadays, with the development of science and technology and the enhancement of people's environmental awareness, lithium batteries have been extensively adopted as power source in mobile phones, laptops, electric tools and electric vehicles, and have a brilliant application prospect. Those lithium batteries used in electric tools and electric vehicles are generally called power batteries. The top cover terminal structure has been widely used in the power batteries. Usually, the top cover plate is designed with a first terminal through hole and a second terminal through hole for the installation of terminals. The terminals and a sealing sleeve are fastened on the top cover plate with an injection molded part to realize electrical connection.

Unfortunately, the above design generally struggles with complicated assembly operation, and secondary crystallization and stress will be generated, which result in deformation of the injection molded part, and cause the leakage, weakening the safety of the battery core and even causing the complete failure.

### SUMMARY

In view of the deficiencies in the prior art, this application provides a battery top cover structure, in which the injection molded part is absent, such that the material deformation is relieved, the sealing performance between the top cover and electrodes is enhanced, and the safety performance of the battery core is improved.

Technical solutions of this application are described as follows.

In a first aspect, this application provides a battery top cover structure, including:
a top cover sheet; and
a first electrode arranged on the top cover sheet;
wherein a sealing sleeve is sleevedly arranged between the first electrode and the top cover sheet; the first electrode includes a conductive part and a welding part; a top of the welding part passes through the top cover sheet and is fixed on the conductive part; and a bottom of the welding part is fixed on a bottom of the top cover sheet by means of a plastic part.

In an embodiment, the conductive part includes a plate body and a protruding seat mounted on a bottom of the plate body; the welding part comprises a ring body and a post arranged on the ring body; and a top of the post is provided with a welding hole matched with the protruding seat.

In an embodiment, the sealing sleeve includes a sleeve body and a first protrusion arranged at a bottom of the sleeve body; the first protrusion is provided with a through hole; a first recess is provided at a top of the through hole for accommodating the plate body; and the post passes through the through hole to be inserted into the first protrusion.

In an embodiment, an edge of the ring body extends upward to form a protruding edge; a bottom surface of the plastic part is provided with a groove matched with the protruding edge; an outer edge is formed on a side of the protruding seat corresponding to the plate body, and an outer diameter of the outer edge is equal to an outer diameter of the plate body.

In an embodiment, the sealing sleeve is prepared from fluoroplastic by injection molding or from fluororubber by die-cutting; the plate body and the protruding seat are independently made of aluminum or a copper-aluminum composite material; and the protruding seat and the welding part are made of a copper material.

In an embodiment, the top cover sheet is provided with a second electrode.

In an embodiment, the top cover sheet is provided with a mounting hole; a second recess is provided on a top of the mounting hole to accommodate the sealing sleeve; a bottom surface of the second recess is in concavo-convex fit with the sealing sleeve; a third recess is provided on a bottom of the mounting hole for accommodating the plastic part; and a bottom surface of the third recess is in concavo-convex fit with the plastic part.

In an embodiment, a surface of the plastic part is provided with a second protrusion; and the top cover sheet is provided with a recess matched with the second protrusion.

In an embodiment, the top cover sheet is further provided with at least one of an explosion-proof valve air hole and a liquid injection hole; an explosion-proof valve is provided between the top cover sheet and the plastic part; and a protective film is provided on a top of the explosion-proof valve air hole.

This application further provides an assembly method for a battery top cover structure includes:
(a) fixing a plastic part on a bottom surface of a top cover sheet; and abutting a bottom of a welding part against a bottom surface of the plastic part;
(b) welding a top of the welding part to a conductive part sequentially through the plastic part, the top cover sheet and a sealing sleeve, so as to ensure that a first electrode is fastened to the top cover sheet; and
(c) welding a negative tab of a battery core to the first electrode; and then welding a positive tab of the battery core to a second electrode.

It should be noted that, in the assembling method provided herein, the bottom of the welding part is fixed to the bottom surface of the top cover sheet through the plastic part. The plastic part plays an insulation role between the welding part and the bottom surface of the top cover sheet. The bottom of the welding part is fixed on the bottom surface of the top cover sheet, and the first electrode is fastened to the top cover sheet through the sealing sleeve, that is, the bottom of the first electrode is clamped on the bottom surface of the top cover sheet, which helps to improve the installation stability of the first electrode and the top cover sheet. The first electrode includes the conductive part and the welding part, so that the sealing sleeve can be easily sleeved on the first electrode, eliminating the need for an injection molded part for fastening the terminal and reducing the material deformation. The sealing sleeve is prepared from fluoroplastic by injection molding or from fluororubber by die-cutting, and has good electrical insulation performance, heat resistance, oil resistance, solvent resistance, abrasion resistance, moisture resistance and low-temperature resistance, facilitating prolonging the service life of the sealing sleeve.

Compared to the prior art, this application has the following beneficial effects.

The battery top cover structure provided herein includes a top cover sheet and a first electrode arranged thereon. A sealing sleeve is sleevedly provided between the first electrode and the top cover sheet. The first electrode includes a conductive part and a welding part, where a top of the welding part passes through a top cover sheet and is fixed on the conductive part, and a bottom of the welding part is fixed on a bottom of the top cover sheet by means of the plastic part. The existing top cover sheet is designed with a first terminal through hole and a second terminal through hole, and the terminals and the sealing sleeve are fastened to the top cover sheet by means of the injection molded part to realize the electrical connection, which results in complicated assembly operation. Moreover, the injection molded part is prone to deformation due to the generation of secondary crystallization and stress, which will result in air leakage, thereby reducing the safety performance of the battery core or causing the complete failure. Therefore, the first electrode is divided into the conductive part and the welding part, so that the sealing sleeve can be sleeved on the first electrode, and the first electrode can be fastened on the top cover sheet, which not only has an insulating effect between the top cover sheet and the first electrode, but also can ensure the sealing between the top cover sheet and the first electrode. At the same time, due to the absence of the injection molded part, the material deformation is reduced. The top of the welding part passes through the top cover sheet and then fixed to the conductive part, which can improve the assembly stability between the welding part and the conductive part and avoid the conductive part from falling off from the sealing sleeve, improving the safety of the battery. At the same time, the bottom of the welding part is fixed to the bottom surface of the top cover sheet through the plastic part, and the plastic part plays an insulation role between the welding part and the bottom surface of the top cover sheet. The first electrode is fastened to the top cover sheet through the sealing sleeve, that is, the bottom of the first electrode is clamped on the bottom surface of the top cover sheet, which helps to improve the stability of the first electrode and the top cover sheet. The structure is free of the injection molded part, reducing the material deformation, ensuring the sealing performance between the top cover sheet and the electrodes, and improving the safety performance of the battery core.

### BRIEF DESCRIPTION OF THE DRAWINGS

FIG. 1 schematically shows a structure of a battery top cover structure according to one embodiment of the present disclosure;
FIG. 2 is an exploded view of the battery top cover structure according to an embodiment of the present disclosure;
FIG. 3 is a sectional view showing the battery top cover structure after the first electrode is mounted;
FIG. 4 is an exploded view showing the battery top cover structure after the first electrode is mounted;
FIG. 5 is a sectional view showing the battery top cover structure after the second electrode is mounted;
FIG. 6 is a structural diagram of a sealing sleeve according to one embodiment of the present disclosure; and
FIG. 7 is a structural diagram of a welding part according to one embodiment of the present disclosure.

In the figures: 1-top cover sheet; 2-first electrode; 3-second electrode; 4-sealing sleeve; 5-plastic part; 11-mounting hole; 13-explosion-proof valve air hole; 14-liquid injection hole; 111-second recess; 112-third recess; 21-conductive part; 22-welding part; 211-plate body; 212-protruding seat; 221-ring body; 222-post; 2121-outer edge; 2211-protruding edge; 2221-welding hole; 41-sleeve body; 42-first protrusion; 421-through hole; 4211-first recess; 51-groove; 52-second protrusion; 6-explosion-proof valve; and 7-protective film.

### DETAILED DESCRIPTION OF EMBODIMENTS

It should be understood by those skilled in the art that hardware manufacturers may refer to the same component by different names. Components are distinguished by the function difference instead of the name difference. As used herein, "comprising" is an open-ended term, and thus should be interpreted as "including but not limited to". "Approximately" means that within an acceptable error range, those skilled in the art can solve technical problems, and basically achieve technical effects.

As used herein, it should be understood that the orientation or positional relationship indicated by the terms "upper", "lower", "front", "rear", "left", "right", "horizontal", etc. is based on the orientation or positional relationship shown in the accompanying drawings, which is only for the convenience of describing the technical solutions and simplifying the description, rather than indicating or implying that the indicated device or element must have a specific orientation, be constructed or operated in a specific orientation. Therefore, these terms should not be understood as a limitation of the present disclosure.

As used herein, unless otherwise expressly specified and defined, terms, such as "mount", "connect", and "fix", should be understood in a broad sense, for example, it may be fixed connection, detachable connection, or integral connection; it may be mechanical direction or electrical connection; it may be direct connection or indirect connection through an intermediate medium; and it may be an internal communication between two members. For those skilled in the art, the specific meanings of the above terms can be understood according to specific situations.

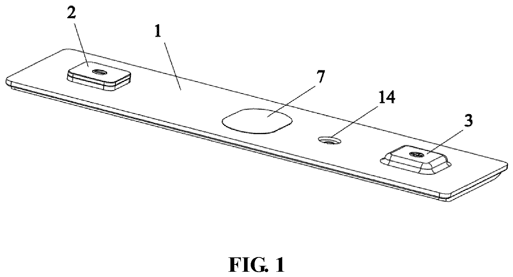

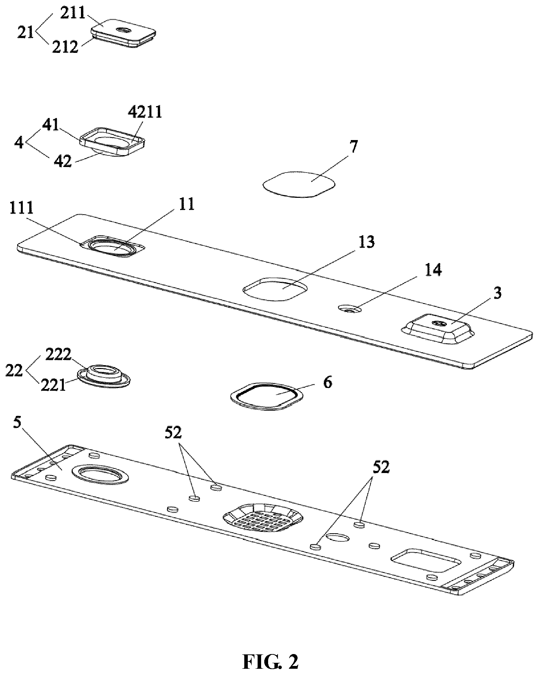

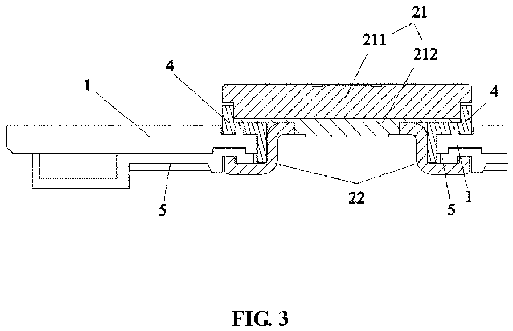

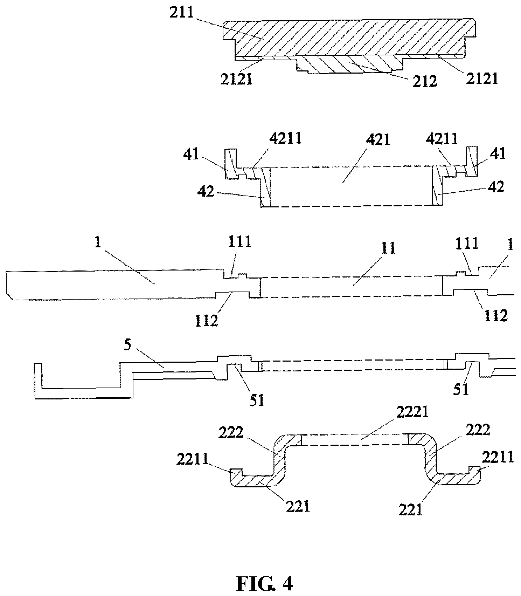

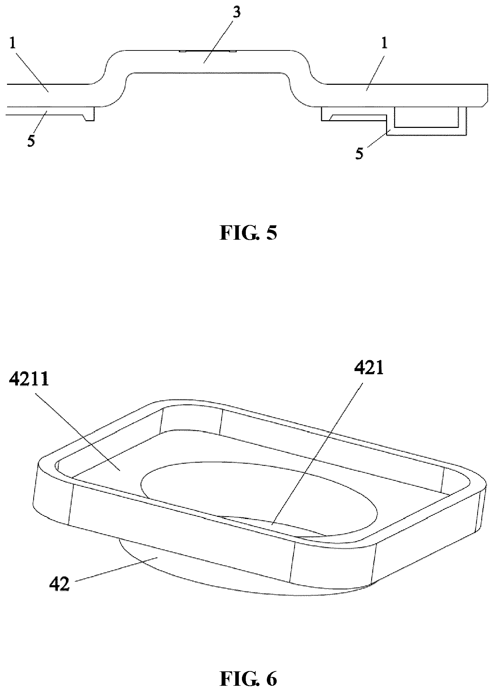

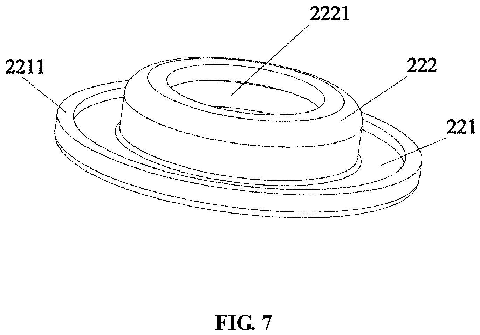

The disclosure will be further described in detail in conjunction with the Figs. 1-7, and these drawings are not intended to limit the disclosure.

### Embodiment 1

Provided herein is a battery top cover structure, which includes a top cover sheet 1 and a first electrode 2 arranged thereon. A sealing sleeve 4 is sleevedly arranged between the first electrode 2 and the top cover sheet 1. The first electrode 2 includes a conductive part 21 and a welding part 22, a top of the welding part 22 passes through the top cover sheet 1 and is fixed on the conductive part 21, and a bottom of the welding part 22 is fixed on a bottom of the top cover sheet 1 by means of a plastic part 5. The existing top cover sheet is designed with a first terminal through hole and a second terminal through hole, and the terminals and the sealing sleeve are fastened to the top cover sheet by means of the injection molded part to realize the electrical connection, which results in complicated assembly operation. Moreover, the injection molded part is prone to deformation due to the generation of secondary crystallization and stress, which will result in air leakage, thereby reducing the safety performance of the battery core or causing the complete failure. Therefore, the first electrode 2 is divided into the conductive part 21 and the welding part 22, so that the sealing sleeve 4 can be sleeved on the first electrode 2, and the first electrode 2 can be fastened on the top cover sheet 1, which not only has an insulating effect between the top cover sheet 1 and the first electrode 2, but also can ensure the sealing between the top cover sheet 1 and the first electrode 2. At the same time, due to the absence of the injection molded part, the material deformation is reduced. The top of the welding part 22 passes through the top cover sheet 1 and then fixed to the conductive part 21, which can improve the assembly stability between the welding part 22 and the conductive part 21 and avoid the conductive part 21 from falling off from the sealing sleeve 4, thereby improving the safety of the battery. At the same time, the bottom of the welding part 22 is fixed to the bottom surface of the top cover sheet 1 through the plastic part 5, and the plastic part 5 plays an insulation role between the welding part 22 and the bottom surface of the top cover sheet 1. The first electrode 2 is fastened to the top cover sheet 1 through the sealing sleeve 4, that is, the bottom of the first electrode 2 is clamped on the bottom surface of the top cover sheet 1, which helps to improve the stability of the first electrode 2 and the top cover sheet 1. The sealing sleeve 4 is prepared from fluoroplastic by injection molding or from fluororubber by die-cutting, and has good electrical insulation performance, heat resistance, oil resistance, solvent resistance, abrasion resistance, moisture resistance and low-temperature resistance, facilitating prolonging the service life of the sealing sleeve 4 and improving the safety performance of the battery core. Compared with the injection molded part formed by the injection overmolding process, this application is not only easy to disassemble and assemble, but also can reduce the cost of manufacturing the battery.

In this embodiment, the conductive part 21 includes a plate body 211 and a protruding seat 212 mounted on a bottom of the plate body 211. The welding part 22 includes a ring body 221 and a post 222 disposed on the ring body 221, and a top of the post 222 is provided with a welding hole 2221 matched with the protruding seat 212. The protruding seat 212 matches with the welding hole 2221, which helps to embed the welding part 22 into the conductive part 21. Such an arrangement not only reduces the overall thickness of the top cover sheet 1 and the occupation of the internal space of the battery, but also improves the energy density of the battery and facilitates the welding between the conductive part 21 and the welding part 22. A welding process is preformed along a gap formed by the protruding seat 212 and the welding hole 2221, thereby reducing the welding cost of the conductive part 21 and the welding part 22, simplifying the welding process, and improving the assembly efficiency. Specifically, the post 222 is a hollow structure which protrudes upward, and a top of the post 222 is provided with the welding hole 2221 matched with the protruding seat 212. The post 222 forms an inner space for accommodating the tabs. Compared with the solid post, the post 222 can prevent the tabs from occupying the space inside the battery, thereby improving the space utilization rate and the energy density of the battery.

In this embodiment, the sealing sleeve 4 includes a sleeve body 41 and a first protrusion 42 disposed at a bottom of the sleeve body 41. The first protrusion 42 is provided with a through hole 421, a first recess 4211 is provided at a top of the through hole 421 for accommodating the plate body 211, and the post 422 passes through the through hole 421 to be inserted into the first protrusion 42. The first protrusion 42 is provided at a bottom of the sealing sleeve 4, and the through hole 421 is provided in the first protrusion 42, so that the post 222 can be inserted in the sealing sleeve 4. Thus, the top of the welding part 22 is surrounded, which has the insulating effect between the welding part 22 and the top cover sheet 1 and reduces a gap between the sealing sleeve 4 and the welding part 22, thereby improving the sealing between the sealing sleeve 4 and the first electrode 2. Moreover, the sealing sleeve 4 is provided with the through hole 421, which facilitates the welding between the conductive part 21 and the welding part 22.

In this embodiment, an edge of the ring body 221 extends upwards to form a protruding edge 2211, and a bottom surface of the plastic part 5 is provided with a groove 51 matched with the protruding edge 2211. The protruding edge 2211 is in concavo-convex fit with the groove 51 to fix the ring body 221, thereby fixing the welding part 22, that is, the bottom of the welding part 22 abuts against the bottom surface of the plastic part 5. Therefore, the bottom of the first electrode 2 is clamped on the bottom of the plastic part 5, which improves the assembly stability between the top cover sheet 1 and the first electrode 2.

In this embodiment, the top cover sheet 1 is provided with a second electrode 3. The second electrode 3 is integrally formed with or welded to the top cover sheet 1. In this embodiment, the top cover sheet 1 protrudes upward to form the convex portion at a position of the top cover sheet 1 corresponding to the second electrode 3, but it is not limited to this. The second electrode 3 can also have a plane structure, that is, the second electrode 3 is flat with the surface of the top cover sheet 1, thereby reducing the height of the top cover sheet 1 and saving the mounting hole for mounting the second electrode 3 reserved on the top cover sheet 1. Such an arrangement can not only improve the sealing performance, structural stability and safety of the battery, but also reduce the manufacturing cost, save the space occupied by the electrodes, and reduce the battery volume.

In this embodiment, the top cover plate 1 is provided with a mounting hole 11. A second recess 111 is provided on a top of the mounting hole 11 to accommodate the sealing sleeve 4, and a bottom surface of the second recess 111 is in concavo-convex fit with the sealing sleeve 4. A third recess 112 is provided on a bottom of the mounting hole 11 for accommodating the plastic part 5, and a bottom surface of the third recess 112 is in concavo-convex fit with the plastic part 5. The top cover sheet 1 is provided with the second recess 111, so the top cover sheet 1 can be partially embedded the sealing sleeve 4 on the top cover sheet 1 to prevent the horizontal displacement of the sealing sleeve 4, which improves the assembly stability between the top cover sheet 1 and the sealing sleeve 4 and reduces the overall thickness of the battery top cover structure. The top cover sheet 1 is provided with the third recess 112, which reduces the occupied space of the top cover structure in the battery, improves the energy density of the battery and prevents the plastic part 5 from moving horizontally, thereby improving the assembly stability between the top cover sheet 1 and the plastic part 5.

In this embodiment, the top cover sheet 1 is further provided with at least one of an explosion-proof valve air hole 13 and a liquid injection hole 14. An explosion-proof valve 6 is provided between the top cover sheet 1 and the plastic part 5, and a protective film 7 is disposed on a top of the explosion-proof valve air hole 13. The liquid injection hole 14 is used to inject the electrolyte into the battery. The explosion-proof valve 6 can automatically and quickly release the pressure in the battery when the pressure inside the battery rises due to overcharging, overdischarging, overcurrent or internal short circuit, thereby avoiding the battery explosion. The protective film 7 can prevent external impurities from entering the explosion-proof valve 6 and affecting the function of the explosion-proof valve 6.

The working principle of the battery top cover structure is described as follows.

The existing top cover sheet is designed with the first terminal through hole and the second terminal through hole, and the terminals and the sealing sleeve are fastened to the top cover sheet by means of the injection molded part to realize the electrical connection, which results in complicated assembly operation and high failure risk of the injection molded part. Moreover, the injection molded part is prone to deformation due to the generation of secondary crystallization and stress, which will result in air leakage, thereby reducing the safety performance of the battery core or causing the complete failure. Therefore, the first electrode 2 is divided into the conductive part 21 and the welding part 22, so that the sealing sleeve 4 can be sleeved on the first electrode 2, and the first electrode 2 can be fastened on the top cover sheet 1, which not only has an insulating effect between the top cover sheet 1 and the first electrode 2, but also can ensure the sealing between the top cover sheet 1 and the first electrode 2. At the same time, due to the absence of the injection molded part, the material deformation is reduced. The top of the welding part 22 passes through the top cover sheet 1 and then fixed to the conductive part 21, which can improve the assembly stability between the welding part 22 and the conductive part 21 and avoid the conductive part 21 from falling off from the sealing sleeve 4, thereby improving the safety of the battery. At the same time, the bottom of the welding part 22 is fixed to the bottom surface of the top cover sheet 1 through the plastic part 5, and the plastic part 5 plays an insulation role between the welding part 22 and the bottom surface of the top cover sheet 1. The first electrode 2 is fastened to the top cover sheet 1 through the sealing sleeve 4, that is, the bottom of the first electrode 2 is clamped on the bottom surface of the top cover sheet 1, which helps to improve the stability of the first electrode 2 and the top cover sheet 1. The second electrode 3 is integrally formed with or welded to the top cover sheet 1. Specifically, the second electrode 3 has a protruding structure or a flat structure. There is no need to reserve the mounting hole for the second electrode 3 on the top cover sheet 1, which can not only improve the sealing performance, structural stability and safety of the battery, but also reduce the manufacturing cost and save the space occupied by connecting parts for the electrodes, thereby reducing the battery volume. Specifically, the post 222 is a hollow structure which protrudes upward, and the top of the post 222 is provided with the welding hole 2221 matched with the protruding seat 212. The post 222 forms a space for accommodating the tabs. Compared with the solid post, the post 222 can prevent the tabs from occupying the space inside the battery, thereby improving the space utilization rate and the energy density of the battery.

### Embodiment 2

The differences from Embodiment 1 are described as follows. In this embodiment, an outer edge 2121 is formed on a side of the protruding seat 212 corresponding to the plate body 211, and an outer diameter of the outer edge 2121 is equal to outer diameter of the plate body 211. The sealing sleeve 4 is prepared from fluoroplastic by injection molding or from fluororubber by die-cutting. The plate body 211 and the protruding seat 212 are independently made of aluminum or a copper-aluminum composite material, and the protruding seat 212 and the welding part 22 are made of a copper material. A surface of the plastic part 5 is provided with a second protrusion 52, and the top cover sheet 1 is provided with a recess matched with the second protrusion 52. The outer edge 2121 is formed on the side of the protruding seat 212 corresponding to the plate body 211, which helps to increase the contact area between the protruding seat 212 and the plate body 211 and reduce the resistance of the conductive part 21, thereby reducing heat generation and improving the overcurrent capability and safety of the conductive part 21. The sealing sleeve 4 is prepared from fluoroplastic by injection molding or from fluororubber by die-cutting, and has good electrical insulation performance, heat resistance, oil resistance, solvent resistance, abrasion resistance, moisture resistance and low-temperature resistance, facilitating prolonging the service life of the sealing sleeve 4. Since the price of aluminum material is lower than that of copper material, when the negative electrode collector is made of copper foil material, the protruding seat 212 and the welding part 22 are the copper foil material corresponding to the negative electrode collector. When the plate body 211 is made of aluminum material, and the protruding seat 212 is made of copper material, which can ensure that the quality of the battery and reduce the production cost of the negative electrode. The second protrusion 52 is in concavo-convex fit with the recess to improve the assembly stability between the top cover sheet 1 and the plastic part 5. The second protrusion 52 can also be a hot-melt column, and the hot-melt column is melted by heating and completely melted in the recess. That is, the plastic part 5 and the top cover sheet 1 are integrated, which reduces the riveting process, simplifies the battery manufacturing, reduces the production cost of the battery, reduces the overall quality of the battery, and does not affect the basic function of the battery. A larger battery core can be placed inside the battery, the top cover structure is more compact, and the battery space utilization rate is improved.

Other structures are the same as those in Embodiment 1.

### Embodiment 3

An assembly method for the battery top cover structure is illustrated as follows.

A second electrode 3 is formed on a top cover sheet 1 by welding or integral molding.

A plastic part 5 is fixed on a bottom surface of the top cover sheet 1, so that a second protrusion 52 on a surface of the plastic part 5 is correspondingly connected to a recess on the bottom surface of the top cover sheet 1. A bottom of a welding part 22 abuts against the plastic part 5 so that a protruding edge 2211 of the welding part 22 is inserted into a groove 51 on a bottom surface of the plastic part 5.

A top of the welding part 22 passes sequentially through the plastic part 5, the mounting hole 11 and the sealing sleeve 4 in sequence and is welded to the conductive part 21 to ensure that the post 222 of the welding part 22 is inserted into the first protrusion 42, so that a first electrode 2 is fastened to the top cover sheet 1.

A negative tab of a battery core is welded to the first electrode 2, and then a positive tab of the battery core is welded to the second electrode 3.

It should be noted that the assembly method of the invention, the second electrode 3 is integrally formed with or welded in the top cover sheet 1. Specifically, the second electrode 3 has a protruding structure or a flat structure. There is no need to reserve the mounting hole for the second electrode 3 on the top cover sheet 1, which can not only improve the sealing performance, structural stability and safety of the battery, but also reduce the manufacturing cost and save the space occupied by connecting parts for the electrodes, thereby reducing the battery volume. The bottom of the welding part 22 is fixed to the bottom surface of the top cover sheet 1 through the plastic part 5, and the plastic part 5 plays an insulation role between the welding part 22 and the bottom surface of the top cover sheet 1. The protruding edge 2211 is in concavo-convex fit with the groove 51 to fix the ring body 221, thereby fixing the welding part 22, that is, the bottom of the welding part 22 abuts against the bottom surface of the plastic part 5. Therefore, the bottom of the first electrode 2 is clamped on the bottom of the plastic part 5, which helps to improve the assembly stability between the top cover sheet 1 and the first electrode 2. Therefore, the first electrode 2 is divided into the conductive part 21 and the welding part 22, so that the sealing sleeve 4 can be sleeved on the first electrode 2. At the same time, due to the absence of the injection molded part, the material deformation is reduced. The post 222 can be inserted in the sealing sleeve 4. Thus, the top of the welding part 22 is surrounded, which has the insulating effect between the welding part 22 and the top cover sheet 1 and reduces the gap between the sealing sleeve 4 and the welding part 22, thereby improving the sealing between the sealing sleeve 4 and the first electrode 2. In addition, the post 222 is a hollow structure which protrudes upward, and the top of the post 222 is provided with the welding hole 2221 matched with the protruding seat 212. The post 222 forms a space for accommodating the tabs. Compared with the solid post, the post 222 can prevent the tabs from occupying the space inside the battery, thereby improving the space utilization rate and the energy density of the battery. The sealing sleeve 4 is prepared from fluoroplastic by injection molding or from fluororubber by die-cutting, and has good electrical insulation performance, heat resistance, oil resistance, solvent resistance, abrasion resistance, moisture resistance and low-temperature resistance, facilitating prolonging the service life of the sealing sleeve 4.

Described above are merely preferred embodiments of the disclosure, which are not intended to limit the disclosure. It should be understood that any modifications and replacements made by those skilled in the art without departing from the spirit of the disclosure should fall within the scope of the disclosure defined by the present claims.

## Claims

1. A battery top cover structure, comprising:
a top cover sheet (1); and
a first electrode (2) arranged on the top cover sheet (1);
**characterized in that** a sealing sleeve (4) is sleevedly arranged between the first electrode (2) and the top cover sheet (1); the first electrode (2) comprises a conductive part (21) and a welding part (22); a top of the welding part (22) passes through the top cover sheet (1) and is fixed on the conductive part (21); and a bottom of the welding part (22) is fixed on a bottom of the top cover sheet (1) by means of a plastic part (5).

2. The battery top cover structure according to claim 1, wherein the conductive part (21) comprises a plate body (211) and a protruding seat (212) mounted on a bottom of the plate body (211); the welding part (22) comprises a ring body (221) and a post (222) arranged on the ring body (221); and a top of the post (222) is provided with a welding hole (2221) matched with the protruding seat (212).

3. The battery top cover structure according to claim 2, wherein the sealing sleeve (4) comprises a sleeve body (41) and a first protrusion (42) arranged at a bottom of the sleeve body (41); the first protrusion (42) is provided with a through hole (421); a first recess (4211) is provided at a top of the through hole (421) for accommodating the plate body (211); and the post (222) passes through the through hole (421) to be inserted into the first protrusion (42).

4. The battery top cover structure according to claim 2, wherein an edge of the ring body (221) extends upward to form a protruding edge (2211); a bottom surface of the plastic part (5) is provided with a groove (51) matched with the protruding edge (2211); an outer edge (2121) is formed on a side of the protruding seat (212) corresponding to the plate body (211), and an outer diameter of the outer edge (2121) is equal to an outer diameter of the plate body (211).

5. The battery top cover structure according to claim 2, wherein the sealing sleeve (4) is prepared from fluoroplastic by injection molding or from fluororubber by die-cutting; the plate body (211) and the protruding seat (212) are independently made of aluminum or a copper-aluminum composite material; and the protruding seat (212) and the welding part (22) are made of a copper material.

6. The battery top cover structure according to claim 1, wherein the top cover sheet (1) is provided with a second electrode (3).

7. The battery top cover structure according to claim 1, wherein the top cover sheet (1) is provided with a mounting hole (11); a second recess (111) is provided on a top of the mounting hole (11) to accommodate the sealing sleeve (4); a bottom surface of the second recess (111) is in concavo-convex fit with the sealing sleeve (4); a third recess (112) is provided on a bottom of the mounting hole (11) for accommodating the plastic part (5); and a bottom surface of the third recess (112) is in concavo-convex fit with the plastic part (5).

8. The battery top cover structure according to claim 1, wherein a surface of the plastic part (5) is provided with a second protrusion (52); and the top cover sheet (1) is provided with a recess matched with the second protrusion (52).

9. The battery top cover structure according to claim 1, wherein the top cover sheet (1) is further provided with at least one of an explosion-proof valve air hole (13) and a liquid injection hole (14); an explosion-proof valve (6) is provided between the top cover sheet (1) and the plastic part (5); and a protective film (7) is provided on a top of the explosion-proof valve air hole (13).

10. An assembly method for a battery top cover structure, comprising:
(a) fixing a plastic part (5) on a bottom surface of a top cover sheet (1); and abutting a bottom of a welding part (22) against a bottom surface of the plastic part (5);
(b) welding a top of the welding part (22) to a conductive part (21) sequentially through the plastic part (5), the top cover sheet (1) and a sealing sleeve (4), so as to ensure that a first electrode (2) is fastened to the top cover sheet (1); and
(c) welding a negative tab of a battery core to the first electrode (2); and then welding a positive tab of the battery core to a second electrode (3).
